# EUROPEAN PATENT APPLICATION

(11) **EP 2 432 049 A1**
(43) Date of publication of application: **21.03.2012**
(21) Application number: 10774687.7
(22) Date of filing: 23.04.2010
(51) Int. Cl.: H01M 4/13, H01M 4/131, H01M 4/139, H01M 4/505, H01M 4/525, H01M 4/62, H01M 4/66

(54) **NONAQUEOUS ELECTROLYTE SECONDARY BATTERY AND METHOD FOR MANUFACTURING SAME**

(30) Priority: 15.05.2009 JP 2009118862
(71) Applicant: Panasonic Corporation, Kadoma-shi Osaka 571-8501 (JP)
(72) Inventor: MURAOKA, Yoshiyuki, Osaka 540-6207 (JP); UGAJI, Masaya, Osaka 540-6207 (JP)
(74) Representative: Grünecker, Kinkeldey, Stockmair & Schwanhäusser
(86) International application number: PCT/JP2010/002958
(87) International publication number: WO 2010/131427

(57) **Abstract**

A nonaqueous electrolyte secondary battery includes a positive electrode (4), a negative electrode (5), and a porous insulating layer (6). The porous insulating layer (6) is provided between the positive electrode (4) and the negative electrode (5). A tensile extension percentage of the positive electrode (4) is 3% or more. In other words, a positive electrode current collector (4A) contains an aluminum particle whose average particle size is 1 µm or more. A positive electrode mixture layer (4B) is provided on at least one surface of the positive electrode current collector (4A), and contains a positive electrode active material and an organic material whose melting point or softening point is higher than 200°C.

## Description

### TECHNICAL FIELD

The present invention relates to nonaqueous electrolyte secondary batteries and methods for fabricating the nonaqueous electrolyte secondary batteries.

### BACKGROUND ART

To meet recent demands for achieving long-time operations of mobile devices, for use of batteries on vehicles in consideration of environmental issues, and for employing DC power supplies for large tools, small and lightweight secondary batteries capable of performing rapid charge and large-current discharge have been required. Examples of typical secondary batteries satisfying such demands include a nonaqueous electrolyte secondary battery.

This nonaqueous electrolyte secondary battery (which may be simply referred to as "battery" hereinafter) includes an electrode group in which a porous insulating layer is provided between a positive electrode and a negative electrode. This electrode group is placed in a battery case made of metal such as stainless steel, iron plated with nickel, or aluminum, together with an electrolyte (Patent Document 1).

### CITATION LIST

### PATENT DOCUMENT

PATENT DOCUMENT 1: Japanese Patent Publication No. H05-182693

### SUMMARY OF THE INVENTION

### TECHNICAL PROBLEM

It is known that, in general, if a nonaqueous electrolyte secondary battery in a charged state is stored in a high temperature condition (e.g., under circumstances of 60°C or more), or if a nonaqueous electrolyte secondary battery is repeatedly charged or discharged, gas is generated in the nonaqueous electrolyte secondary battery, resulting in an increase of the inner pressure of the battery. The increase of the inner pressure of the nonaqueous electrolyte secondary battery causes expansion of the battery or leakage from an explosion-proof valve, and therefore, safety of the battery may be reduced.

The present invention was made in view of the above problems, and it is an objective of the invention to prevent expansion of a nonaqueous electrolyte secondary battery and leakage from the nonaqueous electrolyte secondary battery, and ensure the safety of the battery, even if the nonaqueous electrolyte secondary battery in a charged state is stored in a high temperature condition, or if the nonaqueous electrolyte secondary battery is repeatedly charged or discharged.

### SOLUTION TO THE PROBLEM

A nonaqueous electrolyte secondary battery according to the present invention includes a positive electrode, a negative electrode, and a porous insulating layer provided between the positive electrode and the negative electrode. The positive electrode includes a positive electrode current collector and a positive electrode mixture layer. The positive electrode mixture layer is provided on at least one of surfaces of the positive electrode current collector. The positive electrode current collector contains an aluminum particle whose average particle size is 1 µm or more. In other words, the tensile extension percentage of the positive electrode is 3% or more. The positive electrode mixture layer contains a positive electrode active material and an organic material whose melting point or softening point is higher than 200°C. It is preferable that such an organic material is a binder.

The positive electrode is fabricated according to the following method. First, the positive electrode active material and the organic material whose melting point or softening point is higher than 200°C are provided on at least one of the surfaces of the positive electrode current collector. Next, the positive electrode current collector at least one surface of which is provided with the positive electrode active material and the organic material is subjected to a heat treatment at a predetermined temperature, after the positive electrode current collector is rolled. Here, the predetermined temperature can be expressed by 200°C ≤ (the predetermined temperature) < (the melting point or the softening point of the organic material).

It is possible to remove the moisture or carbon dioxide etc., which is adsorbed to the surface of the positive electrode active material, from the surface of the positive electrode active material in the heat treatment process after rolling. Thus, by fabricating the nonaqueous electrolyte secondary battery using this positive electrode, it is possible to prevent gas, such as carbon dioxide, from being generated from the positive electrode active material even if the nonaqueous electrolyte secondary battery in a charged state is stored in a high temperature condition (e.g., under circumstances of 60°C or more). Also, by fabricating the nonaqueous electrolyte secondary battery using this positive electrode, it is possible to prevent gas, such as carbon dioxide, from being generated from the positive electrode active material even if the nonaqueous electrolyte secondary battery is repeatedly charged or discharged.

Further, because the melting point or the softening point of the organic material is higher than 200°C, it is possible to prevent the organic material from being melted or softened in the heat treatment process after rolling. Accordingly, it is possible to prevent the positive electrode active material from being covered by the melted or softened organic material.

Here, the "average particle size" as used in the present specification is a value obtained according to the following method. First, a battery is charged and a positive electrode is taken out from the charged battery. Next, a cross section of the positive electrode is worked under predetermined conditions. Then, a scanning ion microscope image (an SIM image) of the worked cross section is taken. After that, particle sizes of the aluminum particles are measured from the obtained SIM image, and the average value of the particle sizes of the aluminum particles is calculated.

Further, the "tensile extension percentage of the positive electrode" as used in the present specification is a value obtained according to the following method. First, a positive electrode for measurement (which has a width of 15 mm and a length of 20 mm along a longitudinal direction) is prepared. Next, one end of the positive electrode for measurement along the longitudinal direction is fixed, and the other end of the positive electrode for measurement along the longitudinal direction is extended at a speed of 20 mm/min along the longitudinal direction of the positive electrode for measurement. After that, the length of the positive electrode for measurement along the longitudinal direction immediately before breakage is measured. Using the measured length and the length of the positive electrode for measurement before extension (i.e., 20 mm), the tensile extension percentage of the positive electrode is calculated.

The tensile extension percentage of the positive electrode is equal to {(the length of the positive electrode for measurement along the longitudinal direction immediately before breakage) - (the length of the positive electrode for measurement along the longitudinal direction before extension)} ÷ (the length of the positive electrode for measurement along the longitudinal direction before extension).
In the nonaqueous electrolyte secondary battery of the present invention, the organic material may exist more on the surface of the positive electrode mixture layer than on a portion of the positive electrode mixture layer that is in contact with the surface of the positive electrode current collector.

In the preferred embodiment described later, the organic material is at least one of a polyimide, a polyimide derivative, a tetrafluoroethylene polymer, and a copolymer containing a tetrafluoroethylene unit.

In the nonaqueous electrolyte secondary battery of the present invention, the positive electrode active material is preferably LiNiₓM₍₁₋ₓ₎O₂, where M is at least one of Co, Al and Mn, and x satisfies 0.3≤x<1.

### ADVANTAGES OF THE INVENTION

According to the present invention, even if a nonaqueous electrolyte secondary battery in a charged state is stored in a high temperature condition, or if a nonaqueous electrolyte secondary battery is repeatedly charged or discharged, safety of the nonaqueous electrolyte secondary battery can be ensured.

### BRIEF DESCRIPTION OF THE DRAWINGS

[FIG. 1] FIG. 1 is a graph (a result of an experiment) showing a relationship between a temperature of a heat treatment after rolling and an amount of gas generated from a positive electrode during the heat treatment after rolling.
[FIG. 2] FIG. 2 is a schematic graph for showing a relationship between a temperature of a heat treatment after rolling and a battery capacity when PvdF (poly (vinylidene fluoride)) is used as a binder of a positive electrode.
[FIG. 3] FIG. 3 is an oblique view of a nonaqueous electrolyte secondary battery according to one embodiment of the present invention.
[FIG. 4] FIG. 4 is a cross-sectional view of an electrode group according to one embodiment of the present invention.
[FIG. 5] FIG. 5 is a flow diagram for showing a method for fabricating a positive electrode according to one embodiment of the present invention.
[FIG. 6] FIG. 6 is a flow diagram for showing the first method for fabricating a positive electrode according to the first variation of one embodiment of the present invention.
[FIG. 7] FIG. 7 is a table showing the results obtained in an embodiment.

### DESCRIPTION OF EMBODIMENT

Studies by the inventors of the present application for implementing the present invention will be described before describing an embodiment of the present invention.

The inventors of the present application state in WO2009/019861 that a heat treatment given at a predetermined temperature after rolling to a positive electrode current collector on the surface of which a positive electrode active material etc. is provided (this heat treatment is called "heat treatment after rolling" in the present specification) allows the tensile extension percentage of the positive electrode to be 3% or more (if the heat treatment after rolling is not performed, the tensile extension percentage of the positive electrode is about 1.5%), and therefore that occurrence of internal short circuit due to crush can be prevented. Further, it is disclosed in WO2009/019861 that preferably the temperature of the heat treatment after rolling is as low as possible (e.g., 170°C). According to WO2009/019861, the reason for this is that if the temperature of the heat treatment after rolling is high, a binder contained in a positive electrode mixture layer is melted and the melted binder covers the positive electrode active material, which as a result leads to a reduction in capacity of the nonaqueous electrolyte secondary battery.

However, this time, the inventors of the present application found that if the temperature of the heat treatment after rolling is set high, e.g., 200°C or more, it is possible to prevent an increase of the inner pressure of a nonaqueous electrolyte secondary battery when the nonaqueous electrolyte secondary battery in a charged state is stored in a high temperature condition (e.g., under circumstances of 60°C or more) or when the nonaqueous electrolyte secondary battery is repeatedly charged or discharged.

The problem that the inner pressure of a nonaqueous electrolyte secondary battery increases when the nonaqueous electrolyte secondary battery in a charged state is stored in a high temperature condition or when the nonaqueous electrolyte secondary battery is repeatedly charged or discharged, had been recognized. Such a problem had been thought to occur because a nonaqueous electrolyte was decomposed and gas such as carbon dioxide was generated as a result, when a nonaqueous electrolyte secondary battery in a charged state was stored in a high temperature condition or when a nonaqueous electrolyte secondary battery was repeatedly charged or discharged.

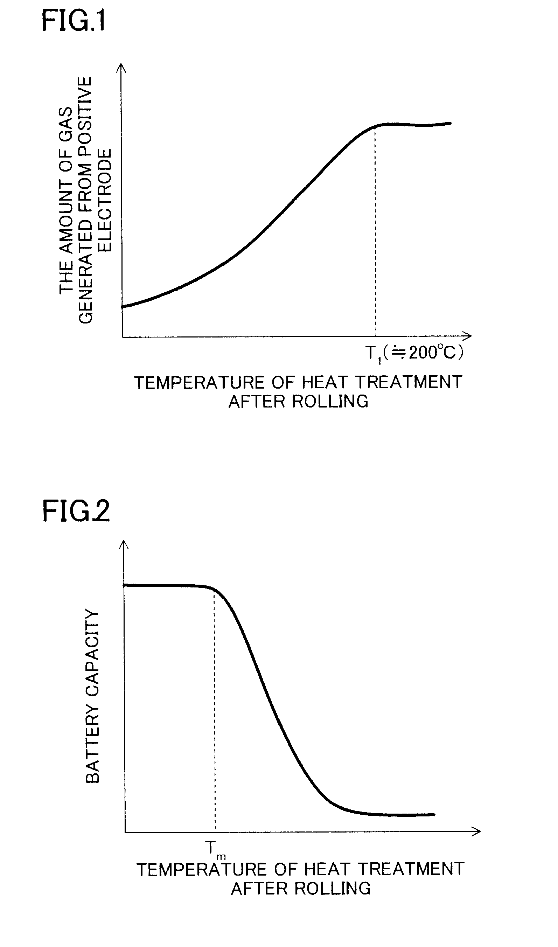

However, this time, the inventors of the present application found that the above problem could be solved by increasing the temperature of the heat treatment after rolling. From this finding, the inventors of the present application considered that the above problem was caused not only due to the decomposition of the nonaqueous electrolyte, but also due to a completely different factor. To find another factor, the inventors of the present application observed phenomena occurring in the positive electrode during the heat treatment after rolling. It turned out that gas was generated from the positive electrode during the heat treatment after rolling. It also turned out that the amount of gas generated from the positive electrode depends on the temperature of the heat treatment after rolling. The result is shown in FIG. 1.

As shown in FIG. 1, the amount of gas generated from the positive electrode increased as the temperature of the heat treatment after rolling increased, until the temperature of the heat treatment after rolling reached T₁ ( ≒ 200°C). However, the amount of gas generated from the positive electrode did not increase much after the temperature of the heat treatment after rolling exceeded T₁.

In view of the result shown in FIG. 1, the inventors of the present application thought that another factor which causes the above problem might be the gas generated from the positive electrode when the nonaqueous electrolyte secondary battery in a charged state was stored in a high temperature condition or when the nonaqueous electrolyte secondary battery was repeatedly charged or discharged. Further, the inventors of the present application focused on the fact that a lithium composite oxide tends to react with carbon dioxide and moisture in the air, and considered the reason why the gas was generated from the positive electrode when the nonaqueous electrolyte secondary battery in a charged state was stored in a high temperature condition or when the nonaqueous electrolyte secondary battery was repeatedly charged or discharged, as follows.

Conventionally, positive electrodes are fabricated according to the method as described below. First, a positive electrode active material, a conductive agent, and a binder are applied to a surface of a positive electrode current collector. Next, the positive electrode current collector to the surface of which the positive electrode active material and others are applied is rolled. The rolled positive electrode current collector is cut into predetermined shape and size.

In this rolling process, a pressure is applied not only to the positive electrode current collector, but also to the positive electrode active material. Therefore, the positive electrode active material is crushed. Thus, the surface area of the positive electrode active material after rolling is several times larger than the surface area of the positive electrode active material before rolling. Since the rolling process is performed in air, carbon dioxide and moisture in the air is adsorbed to the newly formed surfaces of the positive electrode active material. That is, a very large amount of carbon dioxide and moisture, etc. is adsorbed to the surface of the positive electrode active material because the surface area of the positive electrode active material is increased due to rolling.

When the carbon dioxide and moisture are adsorbed to the surface of the positive electrode active material, a reaction occurs between the positive electrode active material and the carbon dioxide and moisture on the surface of the positive electrode active material, which results in formation of a compound. A nonaqueous electrolyte secondary battery is fabricated using this positive electrode. If the nonaqueous electrolyte secondary battery in a charged state is stored in a high temperature condition, or if the nonaqueous electrolyte secondary battery is repeatedly charged or discharged, the compound is decomposed and gas is generated as a result. The compound formed by the reaction which occurred between the positive electrode active material and the carbon dioxide and moisture on the surface of the positive electrode active material is called a "compound which causes an increase in inner pressure" in the following descriptions.

To summarize, the problem in which the inner pressure of the nonaqueous electrolyte secondary battery increases when the nonaqueous electrolyte secondary battery in a charged state is stored in a high temperature condition or when the nonaqueous electrolyte secondary battery is repeatedly charged or discharged, had been thought to be caused by a decomposition of a nonaqueous electrolyte. However, it turned out, from the experiments by the inventors of the present application and their considerations of the results of the experiments, that this problem was caused not only by the decomposition of the nonaqueous electrolyte (the factor which has been considered as causing the problem), but also by adsorption of a very large amount of carbon dioxide and moisture to the surface of the positive electrode active material due to rolling (the factor which was found this time). Further considerations by the inventors of the present application revealed that the problem was caused more by the factor which was found this time, than the factor which has been considered as causing the problem. It turned out that to remove the factor which was found this time, a heat treatment at a temperature of 200°C or more (e.g., a temperature between 200°C and 300°C, both inclusive, or preferably between 230°C and 250°C, both inclusive) might be performed after the rolling of the positive electrode current collector on the surface of which the positive electrode active material, the conductive agent, and the binder were provided.

However, if the temperature of the heat treatment after rolling is set to 200°C or more, another problem occurs. FIG. 2 is a schematic graph for showing a relationship between a temperature of the heat treatment after rolling and a battery capacity when PvdF is used as a binder of the positive electrode. PvdF has been favorably used as a binder of the positive electrode, and a melting point Tm of the PvdF is 172°C. Thus, if the temperature of the heat treatment after rolling is set to 200°C or more, the PvdF is melted to cover the positive electrode active material. This results in a significant reduction in capacity of the obtained nonaqueous electrolyte secondary battery, from the capacity as designed. The inventors of the present application considered that this new problem might be solved by using, as a binder of the positive electrode, an organic material which does not melt or soften even at a temperature of 200°C or more (e.g., even at a temperature between 200°C and 300°C, both inclusive), and implemented the present invention based on this consideration.

An embodiment of the present invention will be described in detail hereinafter based on the drawings. The present invention is not limited to the following embodiment.

### <<First Embodiment of the Invention>>

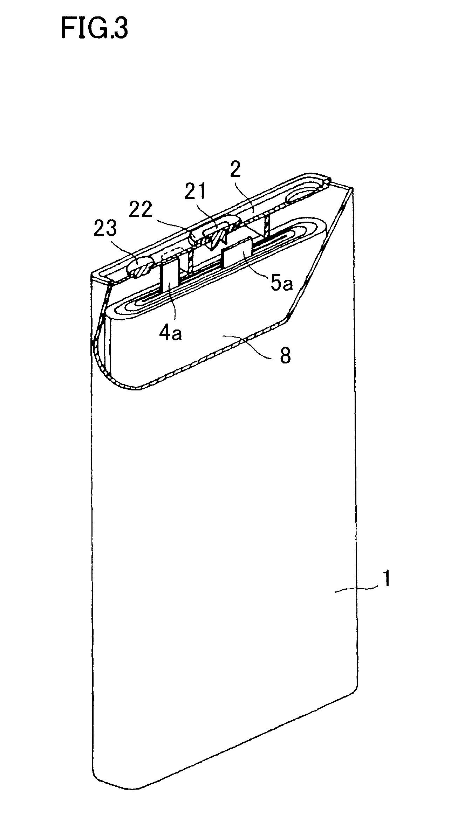

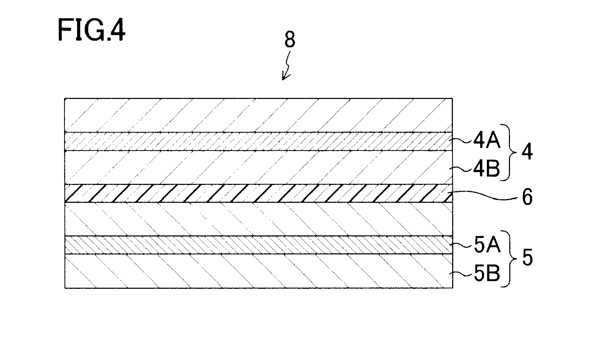

FIG. 3 shows an oblique view of a nonaqueous electrolyte secondary battery according to the present embodiment. FIG. 4 shows a cross-sectional view of an electrode group according to the present embodiment.

According to the nonaqueous electrolyte secondary battery of the present embodiment, an electrode group 8 is placed in a battery case 1 together with a nonaqueous electrolyte, and the opening of the battery case 1 is sealed with a sealing plate 2. The electrode group 8 is formed by winding a positive electrode 4 and a negative electrode 5, with a porous insulating layer 6 interposed between the positive electrode 4 and the negative electrode 5. The positive electrode 4 is connected to a lower surface of the sealing plate 2 (which serves as a positive electrode terminal) via a positive electrode lead 4a, and includes a positive electrode current collector 4A and positive electrode mixture layers 4B, 4B. The negative electrode 5 is connected, via a negative electrode lead 5a, to a rivet 21 (which serves as a negative electrode terminal) provided to the sealing plate 2, and includes a negative electrode current collector 5A and negative electrode mixture layers 5B, 5B. The rivet 21 is insulated from the sealing plate 2 by a gasket 22. An injection hole (not shown) is formed in the sealing plate 2. A nonaqueous electrolyte is injected into the battery case 1 through the injection hole. After the nonaqueous electrolyte is injected into the battery case 1, the injection hole is closed with a sealing plug 23. The positive electrode 4 will be described in detail in the present embodiment.

The positive electrode current collector 4A only needs to be in a thickness, for example, of between 10 µm and 500 µm, both inclusive, and may be a substrate or a foil made of a conductive material, or may be a substrate or foil made of a conductive material and having a plurality of pores. The positive electrode current collector 4A only needs to contain aluminum, and may be made of aluminum, or may be made of aluminum containing a small amount of iron (e.g., in a range between 1.20 weight percent (wt. %) and 1.70 wt. %, both inclusive). The average particle size of an aluminum particle of such a positive electrode current collector 4A is 1µm or more. Further, the inventors of the present application consider that the positive electrode current collector 4A may or may not contain iron, because the temperature of the heat treatment after rolling in the present embodiment is 200°C or more.

The positive electrode mixture layer 4B is provided to both surfaces of the positive electrode current collector 4A, and includes a positive electrode active material, a conductive agent, and a binder.

The positive electrode active material is not specifically limited to any material as long as it is a known material as a positive electrode active material used for a lithium ion secondary battery. Examples of the positive electrode active material include a lithium composite oxide, such as LiCoO₂ LiNiO₂ LiMnO₂ or LiCoNiO₂. More significant effects can be obtained in the present embodiment in the case where the positive electrode active material is a lithium composite oxide which contains nickel (LiNiO₂ or LiCoNiO₂ in the above example), than in the case where the positive electrode active material is a lithium composite oxide which does not contain nickel (LiCoO₂ or LiMnO₂ in the above example). This will be explained in the second variation described later.

The conductive agent of the positive electrode 4 is not specifically limited to any material as long as it is a known material as a conductive agent used for a positive electrode of a lithium ion secondary battery. Examples of the conductive agent of the positive electrode 4 include graphites such as blacklead or carbon blacks such as acetylene black. The conductive agent only needs to be in a range between 1 part by weight (pbw) and 20 pbw, both inclusive, per 100 pbw of the positive electrode active material.

An organic material whose melting point or softening point is higher than 200°C (hereinafter simply referred to as "the organic material," "this organic material" or an "organic material") is used as a binder of the positive electrode 4. The melting point of PvdF which has been considered suitable as a binder of a positive electrode is 172°C, and therefore, this organic material is superior to PvdF in terms of heat resistance. Thus, the heat resistance of the binder of the positive electrode 4 can be improved, compared to the case where PvdF is used as a binder of the positive electrode.

For improvement of the heat resistance of the binder of the positive electrode 4, it is preferable that the binder of the positive electrode 4 is made of the organic material (an organic material whose melting point or softening point is higher than 200°C). However, a minimum heat resistance of the binder of the positive electrode 4 can be ensured if a volume of the positive electrode mixture layer 4B that is occupied by the organic material is 50% or more of a volume of the positive electrode mixture layer 4B that is occupied by the binder of the positive electrode 4. Thus, as long as the volume of the positive electrode mixture layer 4B that is occupied by a material (e.g., PvdF) whose heat resistance is less than the heat resistance of the organic material is smaller than 50% (preferably 30% or less) of the volume occupied by the binder of the positive electrode 4, the material whose heat resistance is less than the heat resistance of the organic material may exist in the positive electrode mixture layer 4B.

Examples of the organic material whose melting point is higher than 200°C include polyimide, a polyimide derivative, PTFE (i.e., polytetrafluoroethylene which is a tetrafluoroethylene polymer) or a copolymer containing a TFE (i.e., tetrafluoroethylene) unit.

Examples of the organic material whose softening point is higher than 200°C include an acrylic rubber or a fluorine rubber whose molecular weight is relatively high and whose heat resistance is high.

Further, the binder of the positive electrode 4 may be at least one of polyimide, a polyimide derivative, PTFE, a copolymer containing a TFE unit, an acrylic rubber and a fluorine rubber, or may contain a small amount of PvdF (e.g., the volume of the positive electrode mixture layer 4B that is occupied by PvdF is 30% or less than the volume of the positive electrode mixture layer 4B that is occupied by the binder).

It is preferable that the content of the binder of the positive electrode 4 is in a range between 1 pbw and 10 pbw, both inclusive, per 100 pbw of the positive electrode active material. That is, if the binder of the positive electrode 4 is made of the organic material, the content of the organic material is preferably between 1 pbw and 10 pbw, both inclusive, per 100 pbw of the positive electrode active material. Even in the case where the binder of the positive electrode 4 contains a small amount of PvdF, the content of the organic material may be in a range between 1 pbw and 10 pbw, both inclusive, per 100 pbw of the positive electrode active material. Thus, the rate of content of the positive electrode active material contained in the positive electrode mixture layer 4B can be ensured, and therefore, it is possible to prevent the reduction in battery capacity. Moreover, it is possible to have the positive electrode active material adhere to the positive electrode current collector 4A.

A distribution of the binder in the positive electrode mixture layer 4B is not specifically limited. The binder of the positive electrode 4 may be dispersed in the positive electrode mixture layer 4B. Alternatively, as will be described in the first variation below, the binder of the positive electrode 4 may exist more on a surface of the positive electrode mixture layer 4B than on a portion of the positive electrode mixture layer 4B that is in contact with a surface of the positive electrode current collector 4A.

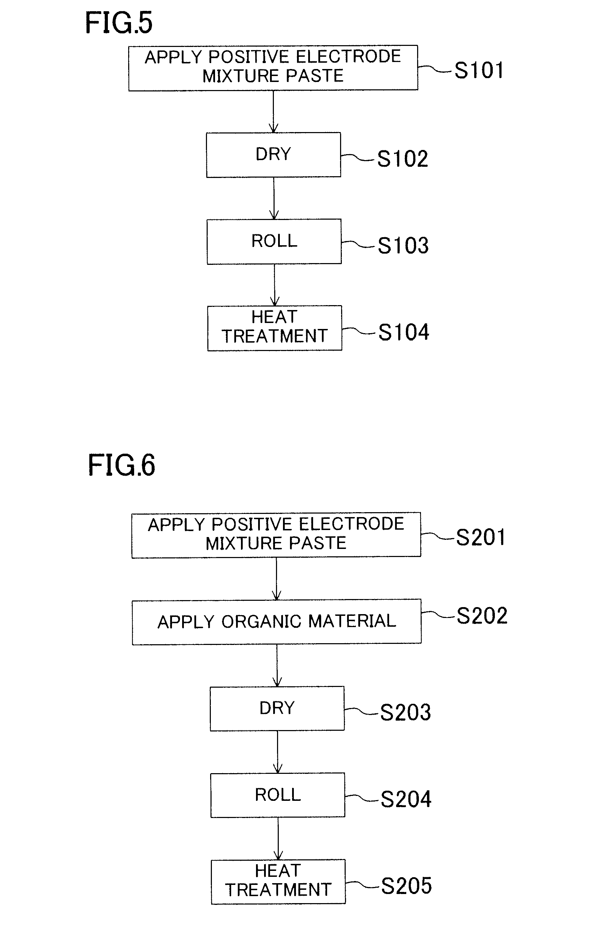

FIG. 5 is a flow diagram for showing a method for fabricating a positive electrode 4 according to the present embodiment.

A positive electrode 4 according to the present embodiment is fabricated according to the method as described below. In the following descriptions, a method for fabricating a positive electrode 4 in which PTFE or a copolymer containing a TFE unit is used as a binder of the positive electrode 4 will be described first. A method for fabricating a positive electrode 4 in which polyimide or a polyimide derivative is used as a binder of the positive electrode 4 will be described next, and then a method for fabricating a positive electrode 4 in which an acrylic rubber or a fluorine rubber is used as a binder of the positive electrode 4 will be described.

First, although not shown in FIG. 5, a positive electrode active material, a conductive agent, and PTFE or a copolymer containing a TFE unit are mixed to form a positive electrode mixture paste. A small amount of PvdF may be mixed with the positive electrode mixture paste.

Next, in Step S101, the positive electrode mixture paste is applied to both surfaces of the positive electrode current collector 4A. Thus, the positive electrode active material, the conductive material, and the PTFE or the copolymer containing a TFE unit are provided to the surfaces of the positive electrode current collector 4A (Step (a)).

Then, the positive electrode mixture paste is dried in Step S102.

After that, in Step S103, the positive electrode current collector to the surfaces of which the positive electrode active material and others are provided is rolled (Step (b)). Here, a pressure is applied to the positive electrode active material, as well. Therefore, the positive electrode active material is crushed, and the surface area of the positive electrode active material is suddenly increased due to rolling. Since the rolling process is generally performed in air, carbon dioxide and moisture etc. in the air are adsorbed to the suddenly increased surface of the positive electrode active material. When the carbon dioxide and moisture are adsorbed to the surface of the positive electrode active material, a reaction occurs between the carbon dioxide and moisture and the positive electrode active material, resulting in formation of a compound which causes an increase in inner pressure of the battery, on the surface of the positive electrode active material.

Then, in Step S104, the rolled positive electrode current collector is subjected to a heat treatment (Process (b)). Examples of this heat treatment include a heat treatment using hot air, induction heating (IH), infrared rays, or electric heat. However, it is preferable to select a method in which a roll heated to a predetermined temperature is brought into contact with the rolled positive electrode current collector. The heat treatment after rolling using the heated roll can shorten the heat treatment time, and can minimize energy loss. The temperature of the heat treatment is higher than a softening temperature of the positive electrode current collector 4A, i.e., 200°C or more, and is lower than a melting point or a softening point of the organic material in the positive electrode mixture layer 4B. The heat treatment time may be set to a period of time in which working efficiency is not reduced. The heat treatment time may be in a range, for example, between 0.1 second and 5 hours, both inclusive, and preferably between 10 seconds and 1 hour, both inclusive.

Gas is generated from the positive electrode during this heat treatment after rolling as shown in FIG. 1. Specifically, in the above rolling process, a compound which causes an increase in inner pressure is formed on the surface of the positive electrode active material. When the heat treatment after rolling is given to this positive electrode, the above compound (a compound which causes an increase in inner pressure) is decomposed, thereby generating carbon dioxide and water.

It is preferable that this heat treatment is performed after rolling, not before rolling, for the reason described below.

There are cases where carbon dioxide or moisture in the air (referred to as a "first adsorbed substance") is adsorbed to the surface of the positive electrode active material in a process prior to the rolling process (e.g., in a process in which the positive electrode mixture paste is formed). If the heat treatment is performed before rolling, gas derived from the first adsorbed substance is generated.

In the rolling process, as well, carbon dioxide or moisture in the air (referred to as a "second adsorbed substance") is adsorbed to the surface of the positive electrode active material. Thus, if the heat treatment is performed after rolling, not only gas derived from the first adsorbed substance, but also gas derived from the second adsorbed substance is generated.

Here, the surface area of the positive electrode active material is suddenly increased in the rolling process. Thus, the amount of the second adsorbed substances is much larger than the amount of the first adsorbed substances. This means that the amount of gas derived from the second adsorbed substance is much larger than the amount of gas derived from the first adsorbed substance. Therefore, a very large amount of carbon dioxide or moisture remains adsorbed to the surface of the positive electrode active material in the positive electrode fabricated by a heat treatment prior to rolling. Thus, a large amount of gas may be generated if such a positive electrode is used for a nonaqueous electrolyte secondary battery and the nonaqueous electrolyte secondary battery in a charged state is stored in a high temperature condition, or if such a positive electrode is used for a nonaqueous electrolyte secondary battery and the nonaqueous electrolyte secondary battery is repeatedly charged or discharged. In view of this, it is preferable that the heat treatment is performed after rolling, not before rolling.

Further, since the temperature of the heat treatment after rolling is lower than the melting point of PTFE or the melting point of the copolymer containing a TFE unit, it is possible to prevent PTFE or the copolymer containing a TFE unit from being melted in the heat treatment after rolling. Moreover, since the temperature of the heat treatment after rolling is lower than the decomposition temperature of PTFE or the decomposition temperature of the copolymer containing a TFE unit, it is possible to prevent PTFE or the copolymer containing a TFE unit from being decomposed in the heat treatment after rolling.

Moreover, if the heat treatment after rolling is performed, the tensile extension percentage of the positive electrode 4, and the average particle size of an aluminum particle contained in the positive electrode current collector 4A can be increased. Specifically, the tensile extension percentage of the positive electrode 4 is increased from about 1.5% to 3% or more, and the average particle size of the aluminum particle contained in the positive electrode current collector 4A is increased from about 0.5 µm to 1 µm or more, if the heat treatment after rolling is performed.

After the completion of the heat treatment after rolling, the positive electrode subjected to the heat treatment after rolling is cut into predetermined shape and size, thereby obtaining the positive electrode 4 according to the present embodiment.

Next, a method for fabricating a positive electrode 4 in which polyimide or a polyimide derivative is used as a binder of the positive electrode 4 will be described. Polyimide and polyimide derivatives do not tend to be dissolved in an organic solvent, but monomers of the respective substances are easily dissolved in an organic solvent. In view of this, it is preferable that the positive electrode 4 is fabricated according to the method described below. In the following descriptions, an emphasis is placed on part of the method that is different from the method for fabricating a positive electrode 4 in which PTFE or a copolymer containing a TFE unit is used as a binder of the positive electrode 4.

First, a positive electrode mixture paste is formed by mixing: a solvent in which a monomer that is polymerized at a temperature between 200°C and 300°C (about a temperature of the heat treatment after rolling in the present embodiment), thereby forming polyimide, or a monomer that is polymerized at the same temperature as above, thereby forming a polyimide derivative is dissolved; a positive electrode active material; and a conductive agent.

Next, in Step S101, the obtained positive electrode mixture paste is applied to both surfaces of the positive electrode current collector 4A. After that, in Step S102, the positive electrode mixture paste is dried on the both surfaces of the positive electrode current collector 4A. Then, in Step S103, the positive electrode current collector to the surfaces of which a positive electrode active material and others are provided is rolled.

Then, in Step S104, a heat treatment at a temperature of 200°C or more is given to the rolled positive electrode current collector. Here, the compound formed on the surface of the positive electrode active material in the rolling process (compound which causes an increase in inner pressure) is decomposed, and carbon dioxide and water are generated. Further, the above monomer is polymerized, thereby forming polyimide or a polyimide derivative.

After that, the positive electrode subjected to the heat treatment after rolling is cut into predetermined shape and size, thereby obtaining the positive electrode 4 according to the present embodiment.

If an organic material whose softening point is higher than 200°C (e.g., a fluorine rubber or an acrylic rubber) is used as a binder of the positive electrode 4, the positive electrode 4 may be fabricated pursuant to the fabrication method for the positive electrode 4 in which PTFE or a copolymer containing a TFE unit is used as a binder of the positive electrode 4.

As described above, the gas adsorbed to the surface of the positive electrode active material can be removed from the surface of the positive electrode active material, if the heat treatment after rolling according to the present embodiment is performed. Thus, generation of gas from the positive electrode 4 can be prevented even if the nonaqueous electrolyte secondary battery in a charged state according to the present embodiment is stored in a high temperature condition, or even if the nonaqueous electrolyte secondary battery is repeatedly charged or discharged. This means that by the heat treatment after rolling according to the present embodiment, it is possible to remove a major factor causing a problem that the inner pressure of a nonaqueous electrolyte secondary battery increases when the nonaqueous electrolyte secondary battery in a charged state is stored in a high temperature condition, and possible to remove a major factor causing a problem that the inner pressure of a nonaqueous electrolyte secondary battery increases when the nonaqueous electrolyte secondary battery is repeatedly charged or discharged. Thus, the expansion of the battery and a leakage from the explosion-proof valve can be prevented even when the nonaqueous electrolyte secondary battery in a charged state according to the present embodiment is stored in a high temperature condition, or when the nonaqueous electrolyte secondary battery is repeatedly charged or discharged. As a result, it is possible to prevent a reduction in safety of the battery.

Further, according to the present embodiment, the temperature of the heat treatment after rolling is lower than the melting point or the softening point of the organic material contained in the positive electrode mixture layer 4B. Thus, it is possible to prevent the organic material contained in the positive electrode mixture layer 4B from being melted or softened and covering the positive electrode active material during the heat treatment after rolling. As a result, it is possible to prevent a reduction in battery capacity caused by the heat treatment after rolling.

Further, according to the present embodiment, it is possible to minimize a reduction in battery capacity caused by the heat treatment after rolling even in the case where a small amount of PvdF is contained in the positive electrode mixture layer 4B. This is because the amount of PvdF contained in the positive electrode mixture layer 4B is small, and therefore, even if the PvdF is melted during the heat treatment after rolling, the melted PvdF only covers part of the positive electrode active material.

Further, the temperature of the heat treatment after rolling is lower than the decomposition temperature of the binder of the positive electrode 4. Thus, it is possible to prevent the binder of the positive electrode 4 from being decomposed during the heat treatment after rolling. As a result, the performance of the nonaqueous electrolyte secondary battery can be ensured. Needless to say, the temperature of the heat treatment after rolling is lower than the decomposition temperatures of the positive electrode current collector 4A, the positive electrode active material, and the conductive agent of the positive electrode 4. Therefore, it is possible to prevent the positive electrode current collector 4A, the positive electrode active material, and the conductive agent of the positive electrode 4 from being decomposed during the heat treatment after rolling.

Moreover, the tensile extension percentage of the positive electrode 4 according to the present embodiment can be 3% or more. In general, the tensile extension percentage of the negative electrode 5 is 3% or more, and the tensile extension percentage of the porous insulating layer 6 is 3% or more. Therefore, the positive electrode 4 can be prevented from being broken before the negative electrode 5 or the porous insulating layer 6 are broken, when the nonaqueous electrolyte secondary battery is crushed. As a result, it is possible to prevent the occurrence of the internal short circuit due to the crush.

Here, the inventors of the present application consider that the positive electrode 4 has a tensile extension percentage of 3% or more due to the heat treatment after rolling, and the average particle size of the aluminum particle contained in the positive electrode current collector 4A is increased from about 0.5 µm to 1 µm or more due to the heat treatment after rolling, because the positive electrode current collector 4A is softened by the heat treatment after rolling. The inventors of the present application consider the reason why the positive electrode 4 has a tensile extension percentage of 3% or more due to the heat treatment after rolling as follows.

The positive electrode mixture layer is formed on the surface of the positive electrode current collector. Thus, the tensile extension percentage of the positive electrode is not restricted by the tensile extension percentage specific to the positive electrode current collector. In general, the tensile extension percentage of the positive electrode mixture layer is lower than the tensile extension percentage of the positive electrode current collector. Thus, in the case where the positive electrode to which the heat treatment after rolling was not given is extended, large cracks are caused in the positive electrode mixture layer, and the positive electrode is broken. This may be because a tensile stress in the positive electrode mixture layer is increased as the positive electrode is extended, and the tensile stress applied to the positive electrode current collector is concentrated on the portion at which large cracks are caused, and as a result, the positive electrode current collector is broken.

On the other hand, in the case where the positive electrode 4 to which the heat treatment after rolling was given is extended, the positive electrode 4 continues to extend while making a lot of fine cracks in the positive electrode mixture layer 4B because the positive electrode current collector 4A is softened, until the positive electrode 4 is finally broken. This may be because the tensile stress applied to the positive electrode current collector 4A is deconcentrated due to the occurrence of the fine cracks in the positive electrode mixture layer 4B, and thus, the positive electrode current collector 4A was not much affected by the occurrence of the cracks. Therefore, the positive electrode 4 continues to extend until the positive electrode 4 has a given size, without being broken simultaneously with the occurrence of the cracks, and the positive electrode current collector 4A is broken when the tensile stress reaches a given magnitude (a value close to the tensile extension percentage specific to the positive electrode current collector 4A).

Further, a formula of 200°C ≤ (a heat treatment temperature) < (a melting point or a softening point of the organic material in the positive electrode mixture layer 4B) stands in the heat treatment after rolling according to the present embodiment. Thus, it is considered that the tensile extension percentage of the positive electrode 4 is in a range of between 3% and 10%, both inclusive, and that the average particle size of the aluminum particle in the positive electrode current collector 4A is in a range of between 1µm and 10µm, both inclusive. Here, if the tensile extension percentage of the positive electrode 4 is 10% or less, the electrode group 8 can be fabricated without deformation of the positive electrode 4.

The following structures may also be used in the present embodiment.

The structure of the nonaqueous electrolyte secondary battery is not limited to the structure described above. For example, the battery case may have a cylindrical shape. However, the effects obtained by setting the temperature of the heat treatment after rolling to 200°C or more are more significant in the case where the battery case has a rectangular shape, than in the case where the battery case has a cylindrical shape. Therefore, it is preferable that the battery case has a rectangular shape as in the present embodiment.

The electrode group may be fabricated by layering a positive electrode and a negative electrode, with the porous insulating layer interposed therebetween. The positive electrode may be connected to the positive electrode terminal via a positive electrode current collector plate, not via the positive electrode lead. The negative electrode may be connected to the negative electrode terminal via a negative electrode current collector plate, not via the negative electrode lead.

The organic material whose melting point or softening point is higher than 200°C is not only used as a binder of the positive electrode. For example, if provided on the surface of the positive electrode mixture layer, the organic material whose melting point or softening point is higher than 200°C may serve as a heat-proof insulating layer at the time of occurrence of an internal short circuit, etc. Thus, the organic material whose melting point or softening point is higher than 200°C may be used not only as a binder of the positive electrode, but also as a heat-proof insulating layer, for example. In this case, as well, the content of the organic material may be in a range between 1 pbw and 10 pbw, both inclusive, per 100 pbw of the positive electrode active material.

The method for applying a mixture paste onto a surface of a current collector, the method for drying the mixture paste on the surface of the current collector, and the method for rolling the positive electrode current collector to the surface of which a positive electrode active material etc. is provided, are not specifically limited. This holds true for the first variation described below.

Further, as described in the first variation below, it is preferable that the organic material exists more on the surface of the positive electrode mixture layer, than on the surface of the positive electrode current collector. The positive electrode active material may be a substance shown in the second variation described later. Further, the negative electrode, the porous insulating layer, and the nonaqueous electrolyte will be explained in the third variation described later.

### (First Variation)

A favorable distribution of the organic material (an organic material whose melting point or softening point is higher than 200°C) in the positive electrode mixture layer will be described in the first variation. The inventors of the present application studied the distribution of the organic material in the positive electrode mixture layer to find that it is more preferable that the organic material exists more on the surface of the positive electrode mixture layer than on the surface of the positive electrode current collector. That is, in the positive electrode mixture layer according to the present variation, the organic material exists more on the surface of the positive electrode mixture layer than on a portion of the positive electrode mixture layer that is in contact with the surface of the positive electrode current collector.

Methods (the first method and the second method) for fabricating a positive electrode according to the present variation will be described below, taking as an example the case in which PTFE or a copolymer containing a TFE unit is used as a binder of the positive electrode. The positive electrode in the present variation may be fabricated according to the first method, or the positive electrode in the present variation may be fabricated according to the second method.

FIG. 6 is a flow diagram showing the first method of the methods for fabricating the positive electrode according to the present variation.

First, although not shown in FIG. 6, a positive electrode active material, a conductive agent, and PTFE or a copolymer containing a TFE unit are mixed to form a positive electrode mixture paste.

Next, in Step S201, the positive electrode mixture paste is applied to both surfaces of a positive electrode current collector.

Then, in Step S202, PTFE or a copolymer containing a TFE unit is applied to the surface of the layer made of the positive electrode mixture paste. Thus, a binder exists more on the surface of a portion to be a positive electrode mixture layer, than on a portion provided on the surface of the positive electrode current collector.

After that, in Step S203, the positive electrode mixture paste and the PTFE or the copolymer containing a TFE unit which is applied to the surface of the layer made of the positive electrode mixture paste, are dried.

Then, in Step S204, the positive electrode current collector to the surface of which the positive electrode active material, the conductive agent, and the binder are provided is rolled, and in Step S205, the rolled positive electrode current collector is subjected to a heat treatment. Conditions of the heat treatment in Step S205 are as described in the above embodiment. The positive electrode subjected to the heat treatment after rolling is cut into a predetermined shape and size to obtain the positive electrode according to the present variation.

The second method of the methods for fabricating the positive electrode according to the present variation includes a drying process (not shown) between Step S201 and Step S202 in the first method. That is, according to the second method of the methods for fabricating the positive electrode of the present variation, the positive electrode mixture paste is applied to both surfaces of the positive electrode current collector first, and then, the positive electrode mixture paste is dried. Next, PTFE or a copolymer containing a TFE unit is applied to the surface of the layer made of the positive electrode mixture paste, and then, the applied PTFE or the copolymer containing a TFE unit is dried. After that, the positive electrode current collector to the surface of which the positive electrode active material, the conductive agent, and the binder are provided is rolled. Then, the rolled positive electrode current collector is subjected to a heat treatment.

Thus, in the present variation, conditions of the heat treatment after rolling are the same as those in the above embodiment, and the organic material is used as a binder of the positive electrode. For this reason, the effects as described in the above embodiment can be obtained in the present variation. Moreover, the inventors of the present application found that the effects obtained by setting the temperature of the heat treatment after rolling to 200°C or more are more significant in the present variation, than in the case where the organic material is uniformly dispersed in the positive electrode mixture layer.

### (Second Variation)

The material for the positive electrode active material is not specifically limited as long as it is a lithium composite oxide. However, it is preferable to use LiNiₓM₍₁₋ₓO₂ (wherein M is at least one of Co, Al, and Mn, and x satisfies 0.3≤x<1). The reason for this is explained below.

In general, the amount of gas generated when a nonaqueous electrolyte secondary battery in a charged state is stored in a high temperature condition, and the amount of gas generated when the nonaqueous electrolyte secondary battery is repeatedly charged or discharged, are larger in the case where a lithium composite oxide containing nickel is used as a positive electrode active material, than in the case where a lithium composite oxide not containing nickel (e.g., LiCoO₂) is used as the positive electrode active material. Thus, the effects obtained by setting the temperature of the heat treatment after rolling to 200°C or more are more significant in the case where the lithium composite oxide containing nickel (the LiNiₓM₍₁₋ₓ₎O₂) is used as the positive electrode active material, than in the case where the lithium composite oxide not containing nickel is used as the positive electrode active material.

### (Third Variation)

Materials known as the materials for a negative electrode, a porous insulating film, and a nonaqueous electrolyte of a lithium ion secondary battery may be used as the materials for the negative electrode, the porous insulating film, and the nonaqueous electrolyte in the above embodiment. Examples of these materials are shown below.

A substrate or foil made of such as copper, stainless steel, or nickel may be used as a material for the negative electrode current collector. The substrate or foil may have a plurality of pores.

The negative electrode mixture layer contains a binder etc., in addition to a negative electrode active material. Examples of the negative electrode active material include blacklead, a carbon material such as carbon fiber, or a silicon compound such as SiOₓ.

The negative electrode is fabricated according to the following method, for example. First, a negative electrode mixture slurry containing a negative electrode active material and a binder, etc., is formed, and then, the negative electrode mixture slurry is applied to both surfaces of the negative electrode current collector and dried. Next, the negative electrode current collector, on the both surfaces of which the negative electrode active material etc. is provided, is rolled. After the rolling, a heat treatment at a predetermined temperature may be performed for a predetermined period of time.

Examples of the porous insulating layer include a microporous thin film, woven fabric, and nonwoven fabric which have high ion permeability, a predetermined mechanical strength, and a predetermined insulation property. Examples of the materials for the porous insulating layer include polyolefin such as polypropylene and polyethylene, and a metal oxide (an aluminum oxide or a silicon oxide) with superior heat resistance. Further, the porous insulating layer may be a single-layer film made of a material of one type, or may be a composite film or a multilayer film made of two or more types of materials.

The nonaqueous electrolyte contains an electrolyte and a nonaqueous solvent in which the electrolyte is dissolved.

A known nonaqueous solvent can be used as a nonaqueous solvent. The type of this nonaqueous solvent is not specifically limited, and one of cyclic carbonate, chain carbonate, and cyclic carboxylate may be solely used, or two or more of them may be mixed.

As the electrolyte, for example, one of LiClO₄ LiBF₄, LiPF₆, LiAlCl₄, LiSbF₆, LiSCN, LiCF₃SO₃, LiCF₃CO₂, LiAsF₆, LiB₁₀Cl₁₀, lower aliphatic lithium carboxylate, LiCl, LiBr, LiI, chloroborane lithium, borates, and imidates may be solely used, or two or more of them may be combined. The amount of the electrolyte dissolved in the nonaqueous solvent is preferably in the range between 0.5 mol/m³ and 2 mol/m³, both inclusive.

Further, the nonaqueous electrolyte may contain an additive which is decomposed on the negative electrode and forms, on the negative electrode, a coating having high lithium ion conductivity to enhance the charge-discharge efficiency of the battery, in addition to the electrolyte and the nonaqueous solvent. As the additive having such a function, for example, one of vinylene carbonate (VC), vinyl ethylene carbonate (VEC) and divinyl ethylene carbonate may be solely used, or two or more of them may be combined.

Further, the nonaqueous electrolyte may contain a known benzene derivative which is decomposed during overcharge and forms a coating on the electrode to inactivate the battery, in addition to the electrolyte and the nonaqueous solvent. The benzene derivative having such a function preferably includes a phenyl group and a cyclic compound group adjacent to the phenyl group. The content of the benzene derivative is 10 vol% or less of the total volume of the nonaqueous solvent.

### EXAMPLES

The inventors of the present application conducted the following experiments to observe the effects according to the above embodiment.

### 1. Fabrication of Nonaqueous Electrolyte Secondary Battery

### (1) Battery 1

### (Method For Fabricating Positive Electrode)

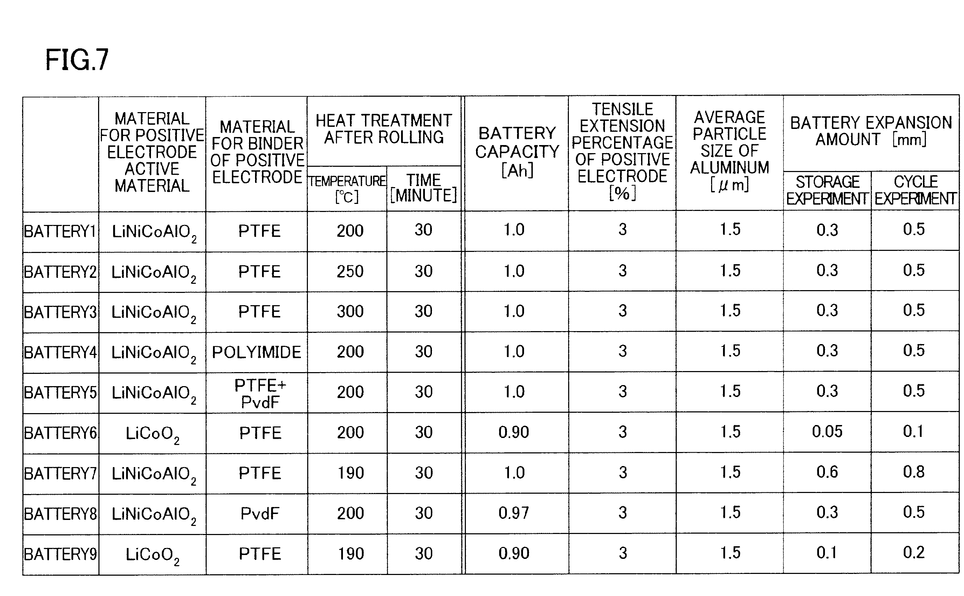

First, 1.25 pbw of acetylene black (a conductive agent) and a solution in which 3 pbw of PTFE (a binder) was dispersed were mixed in 100 pbw of LiNi_{0.82}Co_{0.15}Al_{0.03}O₂ (a positive electrode active material, which is indicated as "LiNiCoAlO₂" in FIG. 7) to obtain a positive electrode mixture slurry.

Next, the positive electrode mixture slurry was applied to both surfaces of an iron-containing aluminum alloy foil (A8021, a positive electrode current collector) having a thickness of 15 µm. Here, no positive electrode mixture slurry was applied to a portion of the positive electrode current collector at which the positive electrode lead was to be provided. After the positive electrode mixture slurry was dried, the positive electrode current collector to the both surfaces of which were provided with the positive electrode active material etc. was rolled. Then, the rolled positive electrode current collector was subjected to a heat treatment in an atmosphere of 200°C for 30 minutes, and was cut to a predetermined dimension to obtain a positive electrode.

### (Method For Fabricating Negative Electrode)

First, 100 pbw of a water solution containing 1 wt. % of carboxymethyl cellulose, and 1 pbw of styrene butadiene rubber (a binder) were added to 100 pbw of flake artificial blacklead, and these materials were mixed to obtain a negative electrode mixture slurry.

After that, the negative electrode mixture slurry was applied to both surfaces of a copper foil (a negative electrode current collector) having a thickness of 8 µm. Here, no negative electrode mixture slurry was applied to a portion of the negative electrode current collector at which the negative electrode lead was to be provided. After the negative electrode mixture slurry was dried, the negative electrode current collector to the both surfaces of which were provided with the negative electrode active material, etc. was rolled. Then, the rolled negative electrode current collector is cut to a predetermined dimension to obtain a negative electrode.

### (Method For Forming Nonaqueous Electrolyte)

To a solvent mixture of ethylene carbonate, propylene carbonate, and diethyl carbonate in a volume ratio of 1:4:5, 3wt. % of vinylene carbonate was added. LiPF₆ was dissolved in this solution in a concentration of 1.0 mol/L, thereby obtaining a nonaqueous electrolyte.

### (Method For Fabricating Battery)

First, a positive electrode lead made of aluminum was attached to a portion of the positive electrode current collector at which the positive electrode mixture layer was not provided. A negative electrode lead made of nickel was attached to a portion of the negative electrode current collector at which the negative electrode mixture layer was not provided. After that, the positive electrode and the negative electrode were faced to each other such that the positive electrode lead and the negative electrode lead extend in the same direction, and a separator (a porous insulating layer) made of polyethylene was placed between the positive electrode and the negative electrode. Then, the positive electrode and the negative electrode were wound around a winding core, with the separator interposed between the positive electrode and the negative electrode, thereby forming an electrode group of a wound type.

Next, an upper insulating plate was placed above the upper surface of the electrode group, and a lower insulating plate was placed below the lower surface of the electrode group. After that, the negative electrode lead was welded to a rivet provided to a sealing plate, and the positive electrode lead was welded to the lower surface of the sealing plate, thereby housing the electrode group in a battery case (a rectangular aluminium case having a thickness of 5.7 mm, a width of 35 mm, and a height of 36 mm). Then, a nonaqueous electrolyte was injected in the battery case under a reduced pressure, and the opening of the battery case was sealed by laser light irradiation. The battery 1 was obtained in this way. The battery capacity of the battery 1 was 1.0 Ah.

The battery capacity is a capacity measured after the battery was subjected, in an atmosphere of 25°C, to a constant current charge at a constant current of 0.2 A until a voltage became 4.2 V and a subsequent constant voltage charge at a constant voltage of 4.2 V until a current became 50 mA, followed by a constant current discharge at a constant current of 0.2 A until the voltage became 2.5 V.

### (2) Battery 2

A battery 2 was fabricated according to the same method as the method for fabricating the battery 1, except that the rolled positive electrode current collector was subjected to a heat treatment in an atmosphere of 250°C for 30 minutes.

### (3) Battery 3

A battery 3 was fabricated according to the same method as the method for fabricating the battery 1, except that the rolled positive electrode current collector was subjected to a heat treatment in an atmosphere of 300°C for 30 minutes.

### (4) Battery 4

A battery 4 was fabricated according to the same method as the method for fabricating the battery 1, except that polyimide was used for the binder of the positive electrode. The method for fabricating a positive electrode of the battery 4 will be described below.

First, 1.25 pbw of acetylene black (a conductive agent) and a solution in which 3 pbw of a polyimide precursor (a binder) was dissolved were mixed in 100 pbw of LiNi_{0.82}Co_{0.15}Al_{0.03}O₂ (a positive electrode active material) to obtain a positive electrode mixture slurry.

Next, the positive electrode mixture slurry was applied to both surfaces of an iron-containing aluminum alloy foil (A8021, a positive electrode current collector) having a thickness of 15 µm. Here, no positive electrode mixture slurry was applied to a portion of the positive electrode current collector at which the positive electrode lead was to be provided. After the positive electrode mixture slurry was dried, the positive electrode current collector to the both surfaces of which were provided with the positive electrode active material etc. was rolled. Then, the rolled positive electrode current collector was subjected to a heat treatment in an atmosphere of 200°C for 30 minutes. The polyimide precursor was changed into polyimide by the heat treatment after rolling. The rolled positive electrode current collector was cut to a predetermined dimension, thereby obtaining a positive electrode of the battery 4.

### (5) Battery 5

A battery 5 was fabricated according to the same method as the method for fabricating the battery 1, except that PvdF was further added as a binder of the positive electrode. Here, the binder of the positive electrode was formed to satisfy PTFE:PvdF=70:30 (volume ratio).

### (6) Battery 6

A battery 6 was fabricated according to the same method as the method for fabricating the battery 1, except that LiCoO₂ was used as a positive electrode active material.

### (7) Battery 7

A battery 7 was fabricated according to the same method as the method for fabricating the battery 1, except that the rolled positive electrode current collector was subjected to a heat treatment in an atmosphere of 190°C for 30 minutes.

### (8) Battery 8

A battery 8 was fabricated according to the same method as the method for fabricating the battery 1, except that PvdF was used for the binder of the positive electrode.

### (9) Battery 9

A battery 9 was fabricated according to the same method as the method for fabricating the battery 7, except that LiCoO₂ was used as a positive electrode active material.

### 2. Measurement of Tensile Extension Percentage of Positive Electrode

Ten for each of the obtained batteries 1-9 were prepared, and a tensile extension percentage of the positive electrode of each of these batteries was checked. The average values for the respective batteries are shown in "TENSILE EXTENSION PERCENTAGE OF POSITIVE ELECTRODE" in FIG. 7.

First, the positive electrode was taken out from the battery, and the length of the positive electrode along a winding direction was measured. Next, one end of the positive electrode along the winding direction was fixed, and the other end of the positive electrode along the winding direction was extended along the winding direction at a speed of 20 mm/min. Then, the length of the positive electrode along the winding direction immediately before breakage was measured. The tensile extension percentage of the positive electrode was calculated, using the measured length and the length of the positive electrode along the winding direction before the extension.

### 3. Measurement of Average Particle Size of Aluminum Particle

An average particle size of an aluminum particle was measured for each of the batteries 1-9. The average values for the respective batteries are shown in "AVERAGE PARTICLE SIZE OF ALUMINUM" in FIG. 7.

First, the positive electrode was taken out from the battery after charge or discharge. Next, using a focused ion beam (FIB) device (Serial No. SM19800 fabricated by SII NanoTechnology Inc.), the cross section of the positive electrode current collector of the pulled-out positive electrode was worked. After that, an SIM image of the worked cross section was taken. Particle sizes of the aluminum particles were measured from the obtained SIM image, and the average value thereof was calculated.

### 4. Measurement of Expansion of Battery When Nonaqueous Electrolyte Secondary Battery In Charged State Is Stored In High Temperature Condition

Expansion of a battery in a charged state at a time when the battery was stored in a high temperature condition was measured.

Specifically, five for each of the batteries 1-9 were prepared. Next, these batteries were subjected, in an atmosphere of 25°C, to a constant current charge at a constant current of 1 A until a voltage became 4.2 V and a subsequent constant voltage charge at a constant voltage of 4.2 V until a current became 50 mA. Then, in an atmosphere of 25°C, a thickness of a middle portion of the battery along an axial direction of the battery (hereinafter simply referred to as a "thickness of a battery's middle portion") was measured. After that, the batteries were stored in an atmosphere of 80°C for two days. Then, the batteries were cooled until the temperatures of the batteries became 25°C, and the thicknesses of the battery's middle portions were measured. Then, the thickness of the battery's middle portion before storage was subtracted from the thickness of the battery's middle portion after storage to calculate the amount of expansion of the battery. Further, thicknesses of the battery's middle portions along the axial direction of the batteries were measured using a caliper. The average values for the respective batteries are shown in "STORAGE EXPERIMENT" of "BATTERY EXPANSION AMOUNT" in FIG. 7.

### 5. Measurement of Expansion of Battery When Nonaqueous Electrolyte Secondary Battery Is Repeatedly Charged or Discharged

Expansion of a battery at a time when a cycle experiment was conducted on the battery was measured.

Specifically, five for each of the batteries 1-9 were first prepared. Next, these batteries were subjected, in an atmosphere of 45°C, to a constant current charge at a constant current of 1 A until a voltage became 4.2 V and a subsequent constant voltage charge at a constant voltage of 4.2 V until a current became 50 mA. Then, in an atmosphere of 25°C, a thickness of a middle portion of the battery along an axial direction of the battery was measured. After that, the batteries were discharged at a constant current of 1 A in an atmosphere of 45°C until a voltage became 2.5 V. Then, the batteries were subjected, in an atmosphere of 45°C, to a constant current charge at a constant current of 1 A until a voltage became 4.2 V and a subsequent constant voltage charge at a constant voltage of 4.2 V until a current became 50 mA, followed by a discharge in an atmosphere of 45°C at a constant current of 1 A until a voltage became 2.5 V. These constant current charge, constant voltage charge, and discharge are considered as one cycle, and this cycle was repeated 500 times. After that, in an atmosphere of 45°C, the batteries were subjected to a constant current charge at a constant current of 1 A until a voltage became 4.2 V, and a constant voltage charge at a constant voltage of 4.2 V until a current became 50 mA. Then, a thicknesse of a battery's middle portion was measured in an atmosphere of 25°C. The thickness of a battery's middle portion before the cycle experiment was subtracted from the thickness of a battery's middle portion after the cycle experiment to calculate the amount of expansion of the battery. The thicknesses of the battery's middle portions were measured using a caliper. The average values for the respective batteries are shown in "CYCLE EXPERIMENT" of "BATTERY EXPANSION AMOUNT" in FIG. 7.

### 6. Result and Consideration

The results are shown in FIG. 7.

It was determined that the tensile extension percentage of the positive electrode became 3% or more if the heat treatment after rolling was performed, and that the average particle size of the aluminum particle contained in the positive electrode current collector became 1 µm or more if the heat treatment after rolling was performed.

First, an amount of expansion of the battery will be considered. Comparison between the results of the batteries 1-3 and the result of the battery 7 shows that the expansion of the battery 7 was more significant than the expansion of the batteries 1-3 in both of the cases where the batteries in a charged state were stored in a high temperature condition and where the batteries were repeatedly subjected to charge or discharge cycles. From this result, it was determined that even if a nonaqueous electrolyte secondary battery in a charged state was stored in a high temperature condition, the expansion of the nonaqueous electrolyte secondary battery can be reduced by setting the temperature of the heat treatment after rolling to 200°C or more, and it was determined that even if a nonaqueous electrolyte secondary battery was repeatedly charged or discharged, the expansion of the nonaqueous electrolyte secondary battery can be reduced by setting the temperature of the heat treatment after rolling to 200°C or more.

Now, a battery capacity will be considered. Comparison between the results of the batteries 1-3 and the result of the battery 7 shows that there was almost no difference in battery capacity between these batteries. On the other hand, comparison between the result of the battery 7 and the result of the battery 8 shows that the battery capacity of the battery 8 was smaller than the battery capacity of the battery 7. From these results, it was determined that even if the temperature of the heat treatment after rolling was set to 200°C or more, the melting of a binder of a positive electrode due to the heat treatment after rolling can be avoided by using PTFE as the binder of the positive electrode. Further, from the result of the battery 4, it was determined that a similar effect as obtained in the case where PTFE was used as a binder of the positive electrode, can be obtained also in the case where polyimide was used as a binder of the positive electrode. Further, comparison between the result of the battery 1 and the result of the battery 5 shows that the battery capacities of these batteries were almost the same. From this result, it was determined that a reduction in battery capacity due to the melting of PvdF can be reduced if the amount of PvdF contained in the positive electrode mixture layer was small.

Next, a relationship between the positive electrode active material and an amount of expansion of the battery will be considered. Comparison between the result of the battery 1 and the result of the battery 7 shows that it was possible to reduce the expansion of the battery 1 by 0.3 mm, compared to the expansion of the battery 7, in both of the cases where the batteries in a charged state were stored in a high temperature condition and where the batteries were repeatedly subjected to charge or discharge cycles. On the other hand, comparison between the result of the battery 6 and the result of the battery 9 shows that it was possible to reduce the amount of expansion of the battery 6 by only 0.05 mm, compared to the amount of expansion of the battery 9, in the cases where the batteries in a charged state were stored in a high temperature condition, and it was possible to reduce the amount of expansion of the battery 6 by only 0.1 mm, compared to the amount of expansion of the battery 9, in the case where the batteries were repeatedly subjected to charge or discharge cycles. From these results, it was determined that the effects obtained by setting the temperature of the heat treatment after rolling to 200°C or more were more significant in the case where lithium composite oxide containing nickel was used as a positive electrode active material, than in the case where lithium composite oxide not containing nickel was used as a positive electrode active material.

The inventors of the present application consider that results similar to the results of the batteries 1-6 can be obtained even if a copolymer containing a TFE unit, an acrylic rubber, or a fluorine rubber is used as a binder of the positive electrode. Also, the inventors of the present application consider that results similar to the results of the batteries 1-5 can be obtained if a lithium composite oxide containing nickel, except LiNi_{0.82}Co_{0.15}Al_{0.03}O₂, is used as a material for the positive electrode active material. Further, the inventors of the present application consider that a result similar to the result of the battery 6 can be obtained if a lithium composite oxide not containing nickel, except LiCoO₂, is used as a material for the positive electrode active material.

### INDUSTRIAL APPLICABILITY

As described above, according to the present invention, it is possible to reduce an increase in inner pressure of a nonaqueous electrolyte secondary battery when the nonaqueous electrolyte secondary battery in a charged state is stored in a high temperature condition, or when the nonaqueous electrolyte secondary battery is repeatedly charged or discharged. Thus, the present invention is useful as a power supply of mobile devices of which a long-time operation is demanded, a power supply on vehicles, or a power supply for large tools.

### DESCRIPTION OF REFERENCE CHARACTERS

- 1: battery case
- 2: sealing member
- 3: gasket
- 4: positive electrode
- 4a: positive electrode lead
- 4A: positive electrode current collector
- 4B: positive elect rode mixture layer
- 5: negative electrode
- 5a: ne gative electrode lead
- 5A: ne gative electrode current collector
- 5B: ne gative electrode mixture layer
- 6: porous insulating layer
- 8: electrode group

## Claims

1. A nonaqueous electrolyte secondary battery, comprising a positive electrode, a negative electrode, and a porous insulating layer provided between the positive electrode and the negative electrode, wherein
the positive electrode includes a positive electrode current collector and a positive electrode mixture layer provided on at least one of surfaces of the positive electrode current collector,
a tensile extension percentage of the positive electrode is 3% or more, and
the positive electrode mixture layer contains a positive electrode active material and an organic material whose melting point or softening point is higher than 200°C.

2. A nonaqueous electrolyte secondary battery, comprising a positive electrode, a negative electrode, and a porous insulating layer provided between the positive electrode and the negative electrode, wherein
the positive electrode includes a positive electrode current collector and a positive electrode mixture layer provided an at least one of surfaces of the positive electrode current collector,
the positive electrode current collector contains an aluminum particle whose average particle size is 1 µm or more, and
the positive electrode mixture layer contains a positive electrode active material and an organic material whose melting point or softening point is higher than 200°C.

3. The nonaqueous electrolyte secondary battery of claim 1 or claim 2, wherein the organic material is a binder.

4. The nonaqueous electrolyte secondary battery of claim 1 or claim 2, wherein the organic material exists more on a surface of the positive electrode mixture layer than on a portion of the positive electrode mixture layer that is in contact with the at least one surface of the positive electrode current collector.

5. The nonaqueous electrolyte secondary battery of claim 1 or claim 2, wherein the organic material is at least one of a polyimide, a polyimide derivative, a tetrafluoroethylene polymer, and a copolymer containing a tetrafluoroethylene unit.

6. The nonaqueous electrolyte secondary battery of claim 1 or claim 2, wherein the positive electrode active material is LiNiₓM₍₁₋ₓ₎O₂, where M is at least one of Co, Al and Mn, and x satisfies 0.3≤x<1.

7. A method for fabricating the nonaqueous electrolyte secondary battery of claim 1 or claim 2, comprising the steps of:
(a) providing the positive electrode active material and the organic material on at least one of the surfaces of the positive electrode current collector, and
(b) providing a heat treatment at a predetermined temperature to the positive electrode current collector at least one surface of which is provided with the positive electrode active material and the organic material, after rolling the positive electrode current collector, wherein
the predetermined temperature in step (b) is 200°C or more, and lower than the melting point or the softening point of the organic material.
